# EUROPEAN PATENT SPECIFICATION

(11) **EP 2 369 093 B1**
(45) Date of publication and mention of the grant of the patent: **02.05.2018**
(21) Application number: 11002095.5
(22) Date of filing: 14.03.2011
(51) Int. Cl.: E04F 15/024, E04F 15/18, E04B 5/48, F24D 3/16, E04C 2/52

(54) **Heatable and vertically adjustable floor**
Beheizbarer und höhenverstellbarer Boden
Sol chauffant et ajustable verticalement

(30) Priority: 16.03.2010 SE 1000240
(43) Date of publication of application: 28.09.2011
(73) Proprietor: Hertig Knut AB, 432 92 Varberg (SE)
(72) Inventor: Carlsson, Göran, 432 92 Varberg (SE)
(74) Representative: Bergenstråhle Group AB

(56) References cited:
- EP-A1- 0 075 143
- EP-A2- 1 544 550
- EP-A2- 1 570 947
- AT-U1- 7 025
- JP-A- 9 291 692
- JP-U- H0 283 943
- KR-U- 20090 006 257
- SE-C2- 528 320

## Description

### TECHNICAL FIELD

The present invention relates to a heatable and vertically adjustable floor which comprises a load-bearing floor slab disposed over a subfloor and vertically adjustable by means of levelling devices, heat-emitting conduits disposed beneath a floor coating, and an insulating layer.

### BACKGROUND ART

SE 528 320 C2 describes a floor of the type mentioned by way of introduction. This floor has an extremely thick, load-bearing floor slab in whose upper side are provided grooves which house conduits for heat-carrying medium. At least partially surrounding these conduits there are heat-disseminating plates of aluminium which extend laterally out on the upper side of the load-bearing floor slab in order to be located beneath an upper floor coating.

In the bottom of the grooves, the floor slab has through-going bores in which internally threaded bushes are impressed, the bushes accommodating levelling screws by means of which the load-bearing floor slab is vertically adjustable beneath an upper floor.

The prior art construction displays an insulating layer which is fixedly glued to the underside of the load-bearing floor slab and which also displays apertures for the levelling screw.

The prior art construction is expensive in that the load-bearing floor slab must be of considerable thickness since, because of the design with the grooves, it will have weakened portions which imply that the thinnest part of the floor slab, i.e. beneath the grooves, is that part which is definitive of dimensioning as regards the mechanical strength of the floor slab. According to the prior art construction, this has been compensated for to some degree in that the levelling devices are positioned in the bottoms of the grooves, i.e. at the weakest regions of the floor slab, This entails a practical limitation in that, for example, the mutual spacing between the grooves and thereby the heat-carrying conduits cannot freely be selected in response to heating requirements, such as smaller groove spacing at outer walls beneath windows.

JP H02-83943 U discloses a heatable floor with heat-emitting conduits in grooves in an insulating layer, which is disposed on top of a floor slab, which is supported by support legs. Intermittent in the insulating layer there are beams.

JP 9-291692 discloses a floor where a woody floor substrate material and floor heating mats are connected to each other in advance.

KR 2009-0006257 discloses an adjustable and heatable floor with adjustable support legs.

EP 1544550 A2 discloses an adjustable floor where heating tubes are arranged in insulation between load-bearing rails.

EP 0075143 A1 discloses flooring plates with heat-retaining properties. Under the flooring plates there are heating tubes in grooves in a floor slab, which is supported by threaded support legs.

EP 1570947 A2 discloses an apparatus for the removal of drilling debris, e. g. for the fastening of an adjustable support leg on a subfloor.

AT 7025U1 discloses an insulating plate with grooves therein for the positioning of heating tubes. A heat conductive foil is arranged in the grooves and on the top of the insulating plate.

### PROBLEM STRUCTURE

The present invention has for its object to design the floor construction intimated by way of introduction such that the drawbacks inherent in the older, prior art technology are obviated. In particular, the present invention has for its object to design the floor construction such that it will be more economical in manufacture, that the grooves for the heat-carrying conduits may be positioned with optional C-C spacing and that, in addition, the levelling devices may be freely positioned in response to need.

### SOLUTION

The objects forming the basis of the present invention will be attained by a heatable, vertically adjustable floor according to claim 1.

### DESCRIPTION OF PREFERRED EMBODIMENT

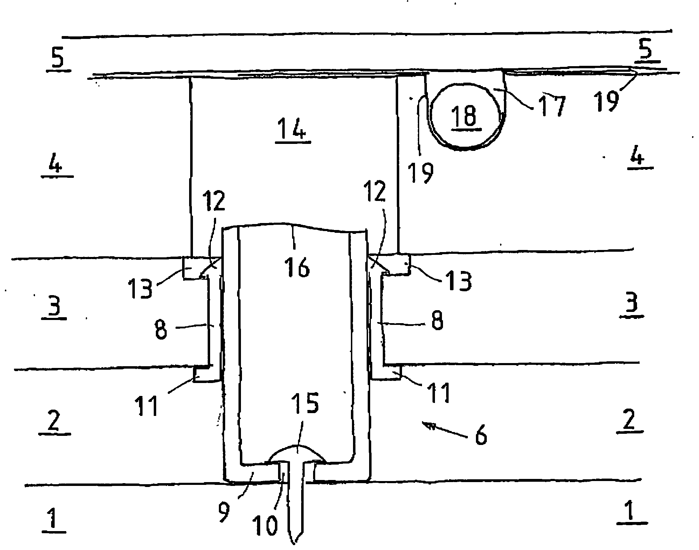

The present invention will now be described in greater detail hereinbelow, with reference to the accompanying Drawing which shows a vertical section through a floor according to the present invention.

In the accompanying Drawing, although it is a cross section, the shading has been omitted to make the Drawing easier to read.

In the figure, reference numeral 1 designates a subfloor, reference numeral 2 an interspace, reference numeral 3 a load-bearing floor slab, reference numeral 4 an insulating layer and reference numeral 5 an upper floor coating. The floor construction is supported in its entirety by vertically adjustable levelling devices 6, which comprise an externally threaded and hollow screw 7 which is preferably manufactured of plastic and which is in mesh with a surrounding bushing 8. By rotating the screw 7 in the bushing 8, the vertical position of the bushing is adjustable in relation to the subfloor 1. In order for this to be possible, the screw 7, which is tubular, is of considerably greater length at the time of assembly than is apparent from the figure and extends up above the upper side of the insulating layer 4 where it is provided with engagement means for transmitting a rotational motion. In its lower end, the screw 7 has a bottom 9 with a central aperture 10 through which a fixing element 15 is passed and fixed in the subfloor 1.

It will be apparent from the Drawing that the bushing 8 has, along its lower periphery, a radially projecting flange 11 on which the load-bearing floor slab 3 rests. The bushing 8 is slit in the axial direction and has, along its upper periphery, barbs or projections 12 which, when the bushing 8 is pressed through an aperture in the load-bearing floor slab 3, are pressed radially inwards in order to snap out in the bevels 13 which are located at the upper side of the load-bearing floor slab 3. The fit between the bushing 8 and the aperture in the load-bearing floor slab, as well as the spring force, are adapted in such a manner that the bushing 8 is not to rotate in the aperture in the floor slab when the screw 7 is rotated.

It is further apparent from the Drawing that the insulating layer, which may consist of an expanded plastic, is provided with an aperture 14 through which the screw 7 is moved down into mesh with the bushing 8 on mounting of the screw. After vertical adjustment and fixing of the fixing means 15 through the hollow interior of the screw 7, the screw 7 is cut off, for example as shown at the line 16.

The insulating layer 4 is fixedly glued on the upper side of the load-bearing floor slab 3 and may be delivered to a building site in this state.

According to the present invention, the insulating layer 4 has, on its upper side, grooves 17 for accommodating heat-emitting conduits 18, for example plastic hoses or pipes for leading hot water or other heat-bearing medium, Partly surrounding, and in as good contact as possible with the conduits 18, there are provided heat-conducting and heat-disseminating plates 19, preferably of aluminium. The fit between the grooves 17, the plates 19 and the conduits 18 is such that surface contact occurs and, in addition, a certain compressive pressure so that good thermal transfer takes place between the conduits 18 and the heat-disseminating plates 19,

The heat-disseminating plates 19 have upper portions which are located on the upper side of the insulating layer 4, preferably on both sides of a groove 17. The extent of the heat-disseminating plates 19 in the lateral direction depends upon how closely the conduits 18 are disposed in relation to one another, but a width of the order of magnitude of 4-8 cm on either side of a groove 17 may be expedient.

Those portions of the heat-disseminating plates 19 which lie on the upper side of the insulating layer 4 are relatively thin and do not prevent a good connection of the superjacent floor covering 5. Possibly, gluing and/or filling may be suitable.

Since the load-bearing floor slab 3 has no weakened portions in the form of milled grooves, its thickness may be kept to a limited level, of the order of magnitude of 19-24 mm, preferably 22 mm. The absence of weakening grooves in the load-bearing floor slab 3 also entails that the levelling devices 6 may be positioned optionally without affecting overall mechanical strength. Thus, it is possible according to the present invention to position the levelling devices 6 with varying degrees of density depending upon, for example, the nature of the subfloor 1.

Since the load-bearing floor slab 3 is stable and immobile, the insulating layer 4 need not absorb any other loadings than purely vertical compressive forces. For this reason, cheaper material qualities may be employed and, in addition, those portions of the insulating layer 4 which are located beneath a groove are totally supported by the load-bearing floor slab 3. Consequently, there are no problems relating to mechanical strength in connection with the grooves 17. Hence, the conduits 18 and the levelling devices 6 may be positioned completely independently of one another, where the positioning of the conduits may be entirely dictated by thermo-technical considerations, while the positioning of the levelling devices may be dictated by the nature of the subfloor and aspects of mechanical strength.

Since the insulating layer 4 is placed on the upper side of the load-bearing floor slab 3, problems might possibly be encountered caused by high relative humidity of the floor slab 3. In practice, this does not, however, constitute any risk element if the floor slab is selected from a damp repellent or damp resistant type.

## Claims

1. A heatable, vertically adjustable floor comprising a load-bearing floor slab (3) disposed above a subfloor (1) and vertically adjustable by means of levelling devices (6), heat-emitting conduits (18) disposed under a floor coating (5) connected with an insulating layer (4), which is disposed on the upper side of the load-bearing floor slab (3), and the heat-emitting conduits (18) are disposed countersunk in grooves 17 in the upper side of the insulating layer, such **that** the positioning of the levelling devices (6) is dictated by the nature of the subfloor and aspects of mechanical strength, independently of the positioning of the grooves (17), which is dictated by thermo-technical considerations.

2. The floor as claimed in Claim 1, **characterised in that** there are disposed, in and along a groove (17) heat-disseminating plates (19) which have portions which are located on the upper side of the insulating layer (4) in connection to one or both sides of a groove.

3. The floor as claimed in Claim 1 or Claim 2, **characterised in that** the levelling devices (6) include an interiorly threaded bushing (8) fixed in the load-bearing floor slab (3), and whose upper end is located flush with or beneath the upper side of the load-bearing slab, and a tubular screw (7) cooperating with the bushing, and that the insulating layer has a through-going aperture (14) for passage of the screw into cooperation with the bushing.

4. The floor as claimed in any of Claims 1 to 3, **characterised in that** the load-bearing floor slab (3) and the insulating layer (4) are united to form a continuous unit before laying of the floor.

## Patentansprüche

1. Beheizbarer, vertikal verstellbarer Boden, der eine lasttragende Bodenplatte (3) umfasst, die über einem Unterboden (1) angeordnet und durch Ausgleichsvorrichtungen (6) vertikal einstellbar sind, Wärmeabstrahlungsleitungen (18) umfasst, die unter einem Bodenbelag (5) angeordnet sind, der mit einer Isolationsschicht (4) verbunden ist, die auf der Oberseite der lasttragenden Bodenplatte (3) angeordnet ist, und die Wärmeabstrahlungsleitungen (18) sind in Nuten (17) in der Oberseite der Isolationsschicht eingesunken, so dass die Positionierung der Ausgleichsvorrichtungen (6) durch die Beschaffenheit des Unterbodens und Aspekte der mechanischen Festigkeit unabhängig von der Positionierung der Nuten (17), die durch wärmetechnische Faktoren vorgegeben wird, vorgegeben wird.

2. Boden nach Anspruch 1, **dadurch gekennzeichnet, dass** in und entlang einer Nut (17) Wärmeverteilungsplatten (19) angeordnet sind, die Abschnitte aufweisen, die auf der Oberseite der Isolationsschicht (4) in Verbindung mit einer oder beiden Seiten einer Nut positioniert sind.

3. Boden nach Anspruch 1 oder Anspruch 2, **dadurch gekennzeichnet, dass** die Ausgleichsvorrichtungen (6) eine mit einem Innengewinde versehene Buchse (8), die in der lasttragenden Bodenplatte (3) fixiert ist und deren oberes Ende bündig mit der Oberseite der lasttragenden Platte oder darunter positioniert ist, und eine rohrförmige Schraube (7), die mit der Buchse zusammenwirkt, umfasst, und dass die Isolationsschicht eine Durchgangsöffnung (14) zum Hindurchführen der Schraube in die Zusammenwirkung mit der Buchse aufweist.

4. Boden nach einem der Ansprüche 1-3, **dadurch gekennzeichnet, dass** die lasttragende Bodenplatte (3) und die Isolationsschicht (4) zur Bildung einer durchgängigen Einheit vor dem Legen des Bodens vereint werden.

## Revendications

1. Plancher chauffant, ajustable verticalement, comprenant une dalle de plancher porteuse (3) disposée au-dessus d'un plancher support (1) et ajustable verticalement au moyen de dispositifs de mise à niveau (6), des conduits d'émission de chaleur (18) disposés sous un revêtement de sol (5) relié à une couche d'isolation (4), qui est disposée sur la face supérieure de la dalle de plancher porteuse (3), et les conduits d'émission de chaleur (18) étant disposés de façon à être noyés dans des rainures (17) dans la face supérieure de la couche d'isolation, de telle sorte que le positionnement des dispositifs de mise à niveau (6) soit dicté par la nature du plancher support et des aspects de résistance mécanique, indépendamment du positionnement des rainures (17), qui est dicté par des facteurs thermotechniques.

2. Plancher selon la revendication 1, **caractérisé en ce que**, dans et le long d'une rainure (17), sont disposées des plaques de diffusion de chaleur (19) qui comportent des parties qui sont situées sur la face supérieure de la couche d'isolation (4), reliées à un côté ou aux deux côtés d'une rainure.

3. Plancher selon la revendication 1 ou la revendication 2, **caractérisé en ce que** les dispositifs de mise à niveau (6) comprennent une bague taraudée (8) fixée dans la dalle de plancher porteuse (3), et dont l'extrémité supérieure est située de niveau avec la face supérieure de la dalle de plancher porteuse ou en dessous de celle-ci, et une vis tubulaire (7) coopérant avec la bague, et **en ce que** la couche d'isolation comporte une ouverture traversante (14) permettant le passage de la vis en coopération avec la bague.

4. Plancher selon l'une quelconque des revendications 1 à 3, **caractérisé en ce que** la dalle de plancher porteuse (3) et la couche d'isolation (4) sont jointes de façon à former un ensemble continu avant la pose du plancher.
